# EUROPÄISCHE PATENTSCHRIFT

(11) **EP 3 598 103 B1**
(45) Veröffentlichungstag und Bekanntmachung des Hinweises auf die Patenterteilung: **09.03.2022**
(21) Anmeldenummer: 18184805.2
(22) Anmeldetag: 20.07.2018
(51) Int. Cl.: G01N 21/03, G01N 21/3504, G01N 21/39

(54) **GASANALYSATOR UND GASANALYSEVERFAHREN**
GAS ANALYSER AND METHOD OF GAS ANALYSIS
ANALYSEUR DE GAZ ET PROCÉDÉ D'ANALYSE DE GAZ

(43) Veröffentlichungstag der Anmeldung: 22.01.2020
(73) Patentinhaber: Siemens Aktiengesellschaft, 80333 München (DE)
(72) Erfinder: Rupp, Simone Isabel, 76137 Karlsruhe (DE)

(56) Entgegenhaltungen:
- DE-A1- 4 331 847
- MOREAU G ET AL: "SPIRALE: A MULTISPECIES IN SITU BALLOONBORNE INSTRUMENT WITH SIX TUNABLE DIODE LASER SPECTROMETERS", APPLIED OPTICS, OPTICAL SOCIETY OF AMERICA, WASHINGTON, DC; US, Bd. 44, Nr. 28, 1. Oktober 2005 (2005-10-01), Seiten 5972-5989, XP001235519, ISSN: 0003-6935, DOI: 10.1364/AO.44.005972
- TARSITANO C G ET AL: "MULTILASER HERRIOTT CELL FOR PLANETARY TUNABLE LASER SPECTROMETERS", APPLIED OPTICS, OPTICAL SOCIETY OF AMERICA, WASHINGTON, DC; US, Bd. 46, Nr. 28, 1. Oktober 2007 (2007-10-01), Seiten 6923-6935, XP001508502, ISSN: 0003-6935, DOI: 10.1364/AO.46.006923
- MING DONG ET AL: "Double-range near-infrared acetylene detection using a dual spot-ring Herriott cell (DSR-HC)", OPTICS EXPRESS, Bd. 26, Nr. 9, 26. April 2018 (2018-04-26) , Seite 12081, XP55524490, DOI: 10.1364/OE.26.012081

## Beschreibung

Die Erfindung betrifft einen Gasanalysator.

Die Erfindung betrifft ferner ein Gasanalyseverfahren.

Die Absorptionsspektroskopie ist eine weit verbreitete Technik zur Bestimmung von Gaskonzentrationen. Dabei können umso kleinere Gaskonzentrationen nachgewiesen werden, je stärker die Absorption von Licht in dem zu messenden Gas ist. Gemäß dem Lambert-Beerschen Gesetz nimmt die Absorption mit zunehmendem Lichtweg durch das zu messende Medium zu. Um lange Lichtwege bei gleichzeitig begrenztem Platzangebot und/oder bei (z. B. für einen schnellen Gasaustausch nötigen) kleinen Gasvolumina zu ermöglichen, kommen oft sogenannte Multipasszellen zum Einsatz, in denen ein Laserstrahl optisch gefaltet und so mehrfach durch dasselbe Gasvolumen geleitet wird. Häufig verwendete Beispiele solcher Multipasszellen sind sogenannte White-Zellen und Herriott-Zellen, in denen ein Laserstrahl zwischen Spiegeloberflächen mehrfach hin und her reflektiert wird, bevor er detektiert wird.

Die Zelle vom (nicht-astigmatischen) Herriott-Typ ist aufgrund ihrer optomechanischen Robustheit besonders für den Einsatz im industriellen Umfeld geeignet. Die Herriott-Zelle besteht aus zwei sphärischen Spiegeln, die sich mit einander zugewandten Spiegelflächen in einem bestimmten Abstand voneinander befinden. Ein Lichtstrahl (in der Regel ein Laserstrahl) kann durch ein Eintrittsfenster, im einfachsten Fall ein Loch, in einem der Spiegel in die Zelle eingekoppelt werden. Der Strahl wird dann zwischen den beiden Spiegeln hin und her reflektiert, wobei sich auf den Spiegeloberflächen je nach Anordnung des Fensters und Einkoppelwinkel des Laserstrahls unterschiedliche elliptische Muster von Reflexionspunkten (Spotmuster) ergeben. Im Sonderfall geht die Ellipse in einen Kreis über. Das kreisförmige Spotmuster wird in Herriott-Zellen besonders oft genutzt, da es den besten Kompromiss zwischen Spotabstand und effizienter Ausnutzung der Spiegelfläche bietet. Das elliptische oder kreisförmige Spotmuster ergibt sich, wenn der Laserstrahl an einer Stelle außerhalb der den beiden Spiegeln gemeinsamen optischen Achse schräg zu dieser in die Herriott-Zelle eingekoppelt wird. Der Laserstrahl tritt entweder aus demselben Fenster oder aus einem anderen Fenster auf einem der beiden Spiegel aus der Zelle aus. Die Pfadlänge des Laserstrahls in der Zelle ist durch die Anordnung der Fenster und die Brennweite sowie den Abstand der Spiegel eindeutig definiert. Aus diesem Grund ändert auch ein anderer Einkoppelwinkel und damit eine andere Wahl des Reflexionsmusters nichts an der Pfadlänge.

In vielen Fällen ist es erforderlich, in einem zu analysierenden Gasgemisch (Messgas) mehrere Gaskomponenten gleichzeitig zu messen, deren Konzentrationen um mehrere Größenordnungen voneinander abweichen können. Im einfachsten Fall können dazu die Strahlen von mehreren Lasern in jeweils eigene Messzellen eingekoppelt werden, was jedoch mit einem großen Platzbedarf und mit hohen Kosten verbunden ist.

Es ist daher wünschenswert, für die Messung aller interessierenden Gaskomponenten nur eine einzige Multipasszelle und einen einzigen Detektor einsetzen zu können. Dazu müsste es allerdings gelingen, die Strahlen von mehreren Lasern so in die Zelle einzukoppeln, dass sie jeweils einen definierten Pfad bestimmter Länge zurücklegen, ohne von den Ein-/Auskoppelvorrichtungen der anderen Laser gestört zu werden, und schließlich die verschiedenen Laserstrahlen auf den Detektor mit seiner begrenzten Detektorfläche (typischerweise im mm²-Bereich) zu lenken.

Um mehrere Laserstrahlen in ein und dieselbe Zelle einzukoppeln, ist es bekannt, die einzelnen Laserstrahlen vor ihrem Eintritt in die Zelle so zu überlagern, dass sie im Wesentlichen den gleichen optischen Pfad zurücklegen. Dies kann beispielsweise mit Hilfe von teildurchlässigen/dichroitischen Spiegeln (WO 2017/182787 A1), sogenannten Spectral Beam Combinern oder faseroptischer Kombination geschehen. Der Vorteil solcher Methoden liegt darin, dass ein einziger Detektor genügt, um die Signale aller Laserstrahlen nach Durchlaufen der Absorptionsstrecke zu messen, weil alle Laserstrahlen mit der gleichen Geometrie ausgekoppelt werden. Allerdings sind auf diese Weise keine unterschiedlichen Pfadlängen für die verschiedenen Laserstrahlen realisierbar. Außerdem benötigen diese Methoden in der Regel teure optische Komponenten, sind teilweise nur für einen stark eingeschränkten Wellenlängenbereich nutzbar und/oder gehen mit einer starken Verringerung der optischen Leistung einher.

Eine Alternative stellt die gleichzeitige Einkopplung mehrerer Laserstrahlen an verschiedenen Stellen der Zelle dar. Dies erlaubt zwar die Realisierung verschiedener Pfadlängen, geht aber bei den bisher bekannten Lösungen mit unterschiedlichen Auskoppelpunkten der verschiedenen Laserstrahlen einher, so dass für jeden Laserstrahl ein eigener Detektor benötigt wird.

So beschreibt W. Gurlit et al.: "Lightweight diode laser spectrometer CHILD (Compact High-altitude In-situ Laser Diode) for balloonborne measurements of water vapor and methane", Jan. 2005, Applied Optics, Vol. 44, No.1, S. 91-102 eine Herriott-Zelle für zwei Laser mit unterschiedlichen Pfadlängen. Jeder Laserstrahl läuft in der Zelle auf seinem eigenen Kreis an Reflexionspunkten um und tritt anschließend durch sein jeweiliges Eintrittsfenster wieder aus, wobei die sphärischen Aberrationen der Spiegel ausgenutzt werden, um unterschiedliche Pfadlängen bei den beiden Kreisen zu erreichen.

Andere Versionen einer Herriott-Zelle für mehrere Laser werden in
- C.G. Tarsitano et al.: "Multilaser Herriott cell for planetary tunable laser spectrometers", Oct. 2007, Applied Optics, Vol. 46, No.28, S. 6923 - 6935,
- G. Moreau et al.: "SPIRALE: a multispecies in situ balloonborne instrument with six tunable diode laser spectrometers", Oct. 2005, Vol. 44, No. 28, S. 5972 - 5989, und
- C.R. Webster et al.: "Aircraft (ER-2) laser infrared absorption spectrometer (ALIAS) for in-situ stratospheric measurements of HCl, N2O, CH4, NO2, and HNO3", Jan. 1994, Vol. 33, No. 3, S. 454 - 472,
beschrieben. Während sich die Anordnungen der Fenster in den vorstehend genannten Veröffentlichungen unterscheiden, haben alle gemeinsam, dass die Reflexionspunkte der verschiedenen Laserstrahlen jeweils auf eigenen Ellipsen liegen, die aber alle zu derselben Pfadlänge führen. Auch hier wird jeder Laserstrahl von einem eigenen Detektor detektiert.

Die Notwendigkeit, mehrere Detektoren einzusetzen, stellt einen nicht zu unterschätzenden Kostenpunkt, gerade bei Messungen im mittleren und fernen Infrarotbereich (MIR und FIR), dar, die seit der Entwicklung und Verbesserung von Quantenkaskadenlasern in den letzten Jahren zunehmend an Relevanz gewinnen.

Aus der DE 43 31 847 A1 ist ein Gasanalysator bekannt, bei dem Laserstrahlen mithilfe von radial nebeneinanderliegenden Eintritts-Lichtwellenleitern durch einen radialen Eintrittsspalt oder alternativ durch individuelle Eintrittsöffnungen in eine zylindrische Herriott-Zelle eingekoppelt werden, so dass die Strahlen in entlang von konzentrischen Kreisen verlaufenden Punktemustern auf den Spiegeln auftreffen. Die Strahlen werden aus der Herriott-Zelle durch einen Austrittsspalt mit nachgeordneter Linse und Lichtwellenleiter auf einen gemeinsamen Detektor ausgekoppelt.

Um unterschiedliche Pfadlängen innerhalb ein und derselben Herriott-Zelle zu erreichen, ist es bekannt, durch Verschieben der Spiegel relativ zueinander eine Änderung des Spotmusters und der Pfadlänge zu erreichen (EP 2 375 237 A1 oder EP 1 972 922 A1), durch Rotation des Spiegels mit dem Austrittsfenster den Laserstrahl an unterschiedlichen Stellen auszukoppeln, so dass sich der effektiv durchlaufene Lichtweg je nach Fensterposition unterscheidet (CN 104155241 A), oder beide Maßnahmen zu kombinieren (US 2017/0307519 A1). Prinzipiell könnte zusätzlich eine simultane Einkopplung der Strahlen von mehreren Lasern vorgesehen werden, jedoch weist ein optischer Aufbau mit beweglichen Teilen diverse Nachteile gegenüber einem statischen Aufbau auf:
- Höhere Komplexität des Aufbaus und damit verbundene höhere Kosten,
- Gefahr von Verschleiß,
- Gefahr von Fehlfunktionen, insbesondere im industriellen Umfeld (z. B. unter Vibrationseinfluss).

Ming Dong et al: "Double-range near-infrared acetylene detection using a dual spot-ring Herriott cell (DSR-HC)",OPTICS EXPRESS, Bd. 26, Nr. 9, 26. April 2018, Seite 12081, beschreibt ein weiteres Beispiel eines Gasanalysators mit einer Herriott-Zelle, wobei verschiedene Pfadlängen bereitgestellt werden. Die jeweiligen Strahlen zeichnen separate kreisförmige Punktmuster auf den Spiegeln der Herriott-Zelle und treten aus der Zelle an verschiedenen Stellen aus.

Der Erfindung liegt daher die Aufgabe zugrunde, in einer einzigen statischen Multipass-Zelle unterschiedliche Pfadlängen für die Strahlen unterschiedlicher Lichtquellen sowie die Detektion der Strahlen mit nur einem Detektor zu ermöglichen.

Gemäß der Erfindung wird die Aufgabe durch den in Anspruch 1 angegebenen Gasanalysator sowie durch das in Anspruch 5 angegebene Gasanalyseverfahren gelöst.

Vorteilhafte Weiterbildungen der Erfindung sind den Unteransprüchen und der folgenden Beschreibung zu entnehmen.

Gegenstand der Erfindung ist somit ein Gasanalysator mit mindestens zwei verschiedenen Strahlungsquellen, einem Detektor und einer ein Messgas enthaltenden Herriott-Zelle mit zwei Spiegeln, wobei die Strahlungsquellen in Bezug auf die Herriott-Zelle derart angeordnet und ausgerichtet sind, dass von ihnen in die Herriott-Zelle eingekoppelte und zwischen den Spiegeln reflektierte Strahlen in entlang von Ellipsen verlaufenden Punktemustern auf den Spiegeln auftreffen, wobei
- die Ellipsen ineinander liegend auf einer gemeinsamen Symmetrieachse zwei gemeinsame Scheitelpunkte und im Übrigen verschiedene Scheitelpunkte aufweisen,
- die Strahlen von zumindest zwei der verschiedenen Strahlungsquellen
- an unterschiedlichen Stellen der zugehörigen Punktemuster in die Herriott-Zelle eintreten und/oder
- derart in die Herriott-Zelle eintreten, dass sie die zugehörigen Punktemuster entlang den Ellipsen in entgegengesetzten Richtungen durchlaufen,
- alle Strahlen an der Stelle eines der gemeinsamen Scheitelpunkte aus der Herriott-Zelle austreten und auf den Detektor treffen, und wobei
- die Strahlen der zumindest zwei der verschiedenen Strahlungsquellen in der Herriott-Zelle unterschiedliche Pfadlängen durchlaufen.

Gegenstand der Erfindung ist ferner ein Gasanalyseverfahren, bei dem Strahlen von mindestens zwei verschiedenen Strahlungsquellen in eine ein Messgas enthaltende Herriott-Zelle eingekoppelt und nach mehrfacher Reflexion aus dieser ausgekoppelt und detektiert werden, wobei die Strahlen derart ausgerichtet werden, dass sie in entlang von Ellipsen verlaufenden Punktemustern auf den Spiegeln auftreffen, wobei
- die Ellipsen ineinander liegend auf einer gemeinsamen Symmetrieachse zwei gemeinsame Scheitelpunkte und im Übrigen verschiedene Scheitelpunkte aufweisen,
- die Strahlen von zumindest zwei der verschiedenen Strahlungsquellen
   - an unterschiedlichen Stellen der zugehörigen Punktemuster in die Herriott-Zelle eingekoppelt werden und/oder
   - derart in die Herriott-Zelle eingekoppelt werden, dass sie die zugehörigen Punktemuster entlang den Ellipsen in entgegengesetzten Richtungen durchlaufen,
- alle Strahlen an der Stelle eines der gemeinsamen Scheitelpunkte ausgekoppelt werden, und wobei
- die Strahlen der zumindest zwei der verschiedenen Strahlungsquellen in der Herriott-Zelle unterschiedliche Pfadlängen durchlaufen.

Die Strahlen von mindestens zwei verschiedenen Lichtquellen, insbesondere Lasern, werden also über Eintrittsfenster in einem oder beiden Spiegeln derart in die Herriott-Zelle eingekoppelt, dass die in der Zelle alle reflektierten Strahlen auf den ineinander verschachtelten Ellipsen umlaufen. Da das Austrittsfenster in einem für alle elliptischen Punktemuster gemeinsamen Scheitelpunkt liegt, können alle Strahlen die Zelle durch dieses eine Austrittsfenster verlassen und beispielsweise mit Hilfe einer hinter dem Austrittsfenster platzierten Optik, z. B. einer asphärischen Linse, auf ein und denselben Detektor gebündelt werden.

Um die Spiegelfläche optimal auszunutzen, liegt das Austrittsfenster vorzugsweise an der Stelle eines gemeinsamen Hauptscheitelpunkts der Ellipsen bzw. Punktemuster, wobei die äußere Ellipse wiederum vorzugsweise kreisförmig ist.

Für jeden Strahl kann die Position des Eintrittsfensters entlang der Ellipse so gewählt werden, dass der verbleibende Weg des Strahls in der Zelle bis zu dem Austrittsfenster der jeweils gewünschten Pfadlänge entspricht. Die oder einzelne Strahlen durchlaufen also nicht die volle Ellipse, sondern nur einen Teil davon.

Befinden sich Ein- und Austrittsfenster in demselben Spiegel, kann die Pfadlänge 1 näherungsweise mit 1 ≈ 2·n·d gewählt werden, wobei d den Spiegelabstand bezeichnet und n = 1, 2, 3,... ist. Befinden sich die Ein- und Austrittsfenster auf unterschiedlichen Spiegeln, kann die Pfadlänge 1 mit 1 ≈ (2n+1) ·d gewählt werden.

Ergänzend oder alternativ zur Anordnung von Eintrittsfenstern an unterschiedlichen Stellen der zugehörigen Punktemuster können unterschiedliche Strahlen derart in die Herriott-Zelle eingekoppelt werden, dass sie die zugehörigen Punktemuster entlang den zugehörigen Ellipsen in entgegengesetzten Richtungen durchlaufen. Läuft ein an einer bestimmten Stelle des zugehörigen Punktemusters in die Herriott-Zelle eingekoppelter Strahl mit der Pfadlänge l₁ um, beträgt die Pfadlänge l₂ eines an derselben Stelle seines Punktemusters eingekoppelten anderen Strahls mit umgekehrter Laufrichtung l₂ = l_{ges} - l₁, wobei l_{ges} die Pfadlänge bei einem vollständigen Umlauf entlang der Ellipse wäre.

Es ist außerdem möglich, durch einzelne oder jedes der Eintrittsfenster zusätzlich zu dem einen Strahl einen weiteren Strahl einzukoppeln, der die Ellipse in umgekehrter Richtung durchläuft, so dass sich bei N Eintrittsfenstern in einem der Spiegel 2N verschiedene Weglängen in der Zelle realisieren lassen.

Die unterschiedlichen Halbachsen der verschiedenen Ellipsen und die Lage der Eintrittsfenster werden vorzugsweise so gewählt, dass ihr Abstand hinreichend groß ist und die verschiedenen umlaufenden Laserstrahlen oder Teile davon nicht bereits durch die Eintrittsfenster für die anderen Strahlen wieder austreten.

Die Erfindung wird im Folgenden beispielhaft anhand der Zeichnungen näher erläutert; im Einzelnen zeigen:
- Fig. 1: einen Gasanalysator mit einer Herriott-Zelle und
- Fig. 2 bis 7: Beispiele für die Punktemuster der auf die Spiegel der Herriott-Zelle auftreffen Strahlen.

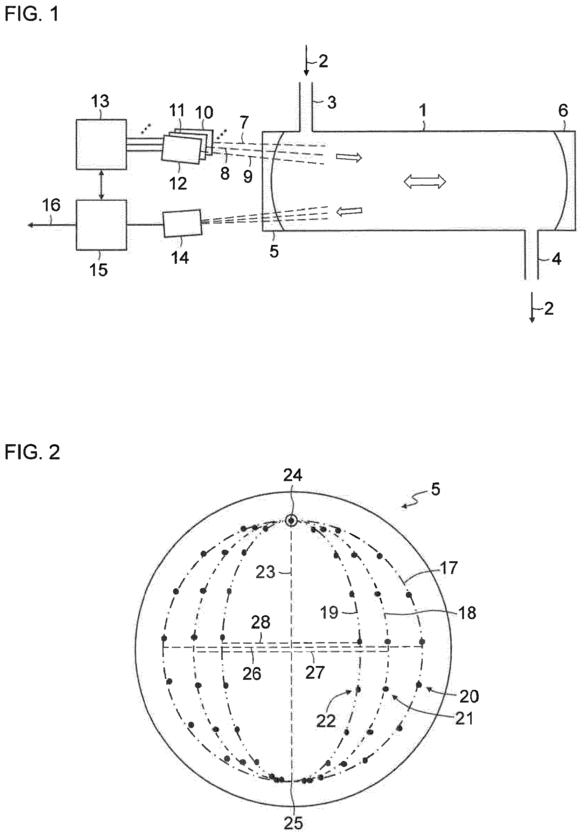

Fig. 1 zeigt in sehr vereinfachter schematischer Darstellung einen Gasanalysator mit einer Multipass-Messzelle in Form einer Herriot-Zelle 1 zur Aufnahme eines zu analysierenden Messgases 2, das über eine erste Gasleitung 3 in die Herriot-Zelle 1 eingeleitet und über eine zweite Gasleitung 4 aus der Zelle 1 heraus geleitet wird. Das Messgas 2 kann z. B. in Form einer Gasprobe kontinuierlich aus einem industriellen Prozess entnommen werden. Die Herriot-Zelle 1 weist zwei einander gegenüberliegende sphärische Spiegel 5, 6 auf, zwischen denen in die Zelle 1 eingeleitetes Licht hin und her reflektiert wird. Einer der beiden Spiegel, hier z. B. der Spiegel 5, weist hier nicht gezeigte Fenster zur Einkopplung von Lichtstrahlen 7, 8, 9 auf, die von unterschiedlichen Lichtquellen 10, 11, 12 erzeugt werden. Bei den Lichtquellen 10, 11, 12 handelt es sich vorzugsweise um Laser, die Licht in unterschiedlichen Infrarot-Wellenlängenbereichen emittieren. Die Lichtquellen 10, 11, 12 können von einer Steuereinrichtung 13 gleichzeitig oder nacheinander im Multiplex periodisch angesteuert werden, z. B. mit einem rampen- oder dreieckförmigen Strom, um das von ihnen jeweils erzeugte Licht über vorgegebene Wellenlängenbereiche durchzustimmen, in denen ausgewählte Absorptionslinien von zu bestimmenden Gaskomponenten (Zielgase) des Messgases 2 liegen. Zum Zwecke der Messung nach dem Prinzip der Wellenlängen-Modulationsspektroskopie (WMS) kann der rampen- oder dreieckförmige Strom gleichzeitig mittels einer vorgegebenen Frequenz f moduliert werden.

Das von den Gaskomponenten des Messgases 2 wellenlängenspezifisch absorbierte Licht 7, 8, 9 der Lichtquellen 10, 11, 12 wird nach mehrfacher Reflexion in der Herriot-Zelle 1 über ein hier nicht gezeigtes Fenster in einem der beiden Spiegel, hier z. B. wieder der Spiegel 5, aus der Zelle 1 auf einen Detektor 14 ausgekoppelt. Eine dem Detektor 14 nachgeordnete Auswerteeinrichtung 15 wertet die Intensität des Lichts 7, 8, 9 an den Stellen der ausgewählten Absorptionslinien der Zielgase, z. B. phasensensitiv bei einer oder mehreren höheren Harmonischen der oben erwähnten Modulationsfrequenz f, aus und ermittelt daraus als Analysenergebnis 16 die Konzentrationen der Zielgase.

Die Strahlungsquellen 10, 11, 12 sind jeweils in einem Abstand von der den beiden Spiegeln 5, 6 gemeinsamen optischen Achse angeordnet und unter unterschiedlichen Winkeln schräg zu dieser ausgerichtet, so dass die in die Herriott-Zelle 1 eingekoppelten und zwischen den Spiegeln 5, 6 reflektierten Strahlen 7, 8, 9 auf ineinander verschachtelten Ellipsen umlaufen. In Abhängigkeit von dem jeweiligen Einkopplungswinkel lassen sich zwei unterschiedliche Umlaufrichtungen realisieren.

Wie Fig. 2 am Beispiel des Spiegels 5 zeigt, treffen die in der Herriott-Zelle 1 mehrfach reflektierten Strahlen 7, 8, 9 in entlang von Ellipsen 17, 18, 19 verlaufenden Punktemustern 20, 21, 22 auf den Spiegeln auf. Dabei wird z. B. das Punktemuster 20 entlang der Ellipse 17 von dem Strahl 7, das Punktemuster 21 entlang der Ellipse 18 von dem Strahl 8 und das Punktemuster 22 entlang der Ellipse 19 von dem Strahl 9 erzeugt. Die unterschiedlichen Ellipsen 19, 20, 21 weisen bei dem gezeigten Beispiel eine gemeinsame Hauptachse 23 mit übereinstimmenden Hauptscheitelpunkten 24, 25 und unterschiedlich lange Nebenachsen 26, 27, 28 auf. Weiterhin bildet bei dem gezeigten Beispiel die größte Ellipse 17 einen Kreis, so dass die Spiegelfläche optimal ausgenutzt wird.

Wenn nun alle Strahlen 7, 8, 9 durch ein an der Stelle des Hauptscheitelpunktes 24 in dem Spiegel 5 vorgesehenes Fenster in die Herriott-Zelle 1 eingekoppelt werden, können sie nach jeweils vollständigem Umlauf in der Zelle 1 entlang der zugehörigen und von dem jeweiligen Einkoppelwinkel abhängigen Ellipse durch dasselbe Fenster wieder ausgekoppelt werden.

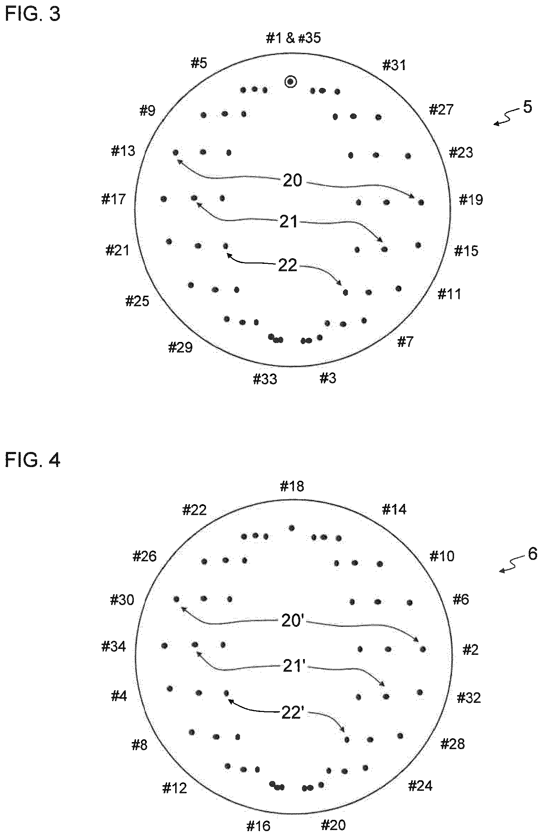

Fig. 3 zeigt für diesen Fall die Punktemuster 20, 21, 22 auf dem Spiegel 5 und Fig. 4 die entsprechenden Punktemuster 20', 21', 22' auf dem Gegenspiegel 6, wobei die Zahlen entlang des Spiegelumfangs die Reihenfolge der Reflexionen zwischen dem Eintritt #1 in die Zelle 1 und dem Austritt #35 (fällt mit #1 zusammen) aus der Zelle 1 bezeichnen, wenn die Strahlen in der Herriot-Zelle 1 in der einen von zwei Richtungen umlaufen. Bei entgegengesetzter Umlaufrichtung finden die Reflexionen in der Reihenfolge von #35 bis #1 statt. Die jeweilige Pfadlängen 1 der Strahlen 7, 8, 9 in der Zelle betragen bei dem hier gezeigten Beispiel näherungsweise das 34-fache des Abstandes beider Spiegel 5, 6.

Wenn der eine oder andere der Strahlen 7, 8, 9 an einer von dem Hauptscheitelpunkt 24 verschiedenen Stelle, z. B. #13, des zugehörigen Punktemusters in die Herriott-Zelle 1 eingekoppelt wird, durchläuft der betreffende Strahl bis zur Auskopplung an der Stelle des Hauptscheitelpunkts 24 nur noch einen Teil der Ellipse bzw. des Punktemusters (#13 bis #35), und die Pfadlänge verringert sich entsprechend, bei dem erwähnten Beispiel auf das 22-fache des Spiegelabstandes.

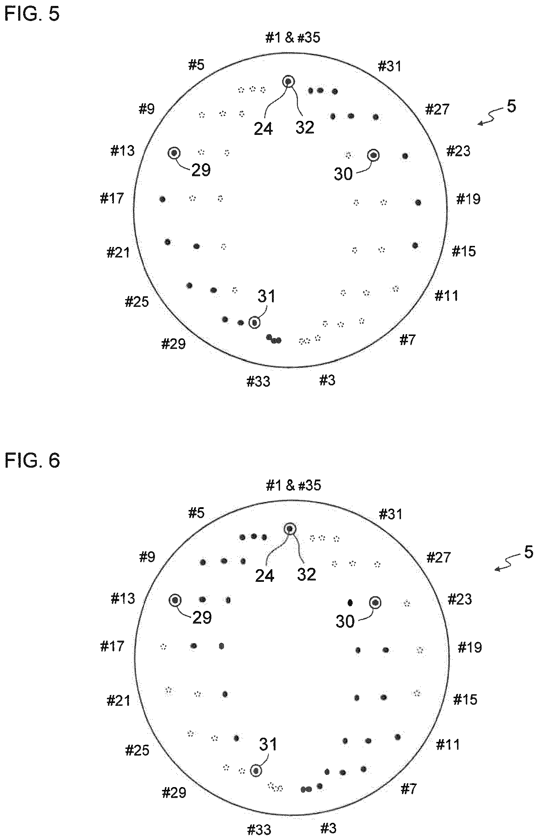

Fig. 5 zeigt ein Beispiel, bei dem die Strahlen 7, 8, 9 durch jeweils unterschiedliche Eintrittsfenster 29, 30, 31 in dem Spiegel 5, hier z. B. an den Stellen #13, #23, #29 der Punktemuster 20, 21, 22, in die Herriott-Zelle 1 eintreten und auf den ineinander verschachtelten Teil-Ellipsen umlaufen, bis sie die Zelle 1 durch das gemeinsame Austrittsfenster 32 im Hauptscheitelpunkt 24 (#35) verlassen. Die Strahlen 7, 8, 9 durchlaufen daher unterschiedlich lange Teilstrecken des Gesamtpfades, so der Strahl 7 entlang der äußeren Ellipse von #13 bis #35 (bei umgekehrter Umlaufrichtung von #13 bis #1), der Strahl 8 entlang der mittleren Ellipse von #23 bis #35 (bei umgekehrter Umlaufrichtung von #23 bis #1) und der Strahl 9 entlang der inneren Ellipse von #29 bis #35 (bei umgekehrter Umlaufrichtung von #29 bis #1). Die fehlenden Reflexionspunkte sind gepunktet dargestellt.

Wie anhand von Fig. 6 verdeutlicht wird, können zusätzlich zu den Strahlen 7, 8, 9 durch dieselben Eintrittsfenster 29, 30, 31 drei weitere Strahlen von hier nicht gezeigten weiteren Lichtquellen eingekoppelt werden, deren Eintrittswinkel jeweils so gewählt sind, dass sie die Punktemuster 20, 21, 22 bzw. die zugehörigen Ellipsen in umgekehrter Richtung und daher mit wiederum anderen Weglängen durchlaufen. Läuft der eine Strahl mit einer Pfadlänge l₁ um, so beträgt die Pfadlänge l₂ des weiteren umgekehrt umlaufenden Strahls l₂ = l_{ges} - l₁, wobei l_{ges} die Pfadlänge eines vollständigen Umlaufes ist. Der zusammen mit dem (ersten) Strahl 7 durch das Fenster 29 eingekoppelte zweite Strahl läuft somit entlang der äußeren Ellipse rückwärts von #13 bis #1 (entspricht #35). Der zusammen mit dem (ersten) Strahl 8 durch das Fenster 30 eingekoppelte zweite Strahl läuft entlang der mittleren Ellipse rückwärts von #23 bis #1, und der zusammen mit dem (ersten) Strahl 9 durch das Fenster 31 eingekoppelte zweite Strahl läuft entlang der inneren Ellipse rückwärts von #29 bis #1. Die fehlenden Reflexionspunkte sind wieder gepunktet dargestellt.

Auf diese Weise lassen sich bei N Eintrittsfenstern in einem der Spiegel 2N verschiedene Weglängen in der Zelle 1 realisieren.

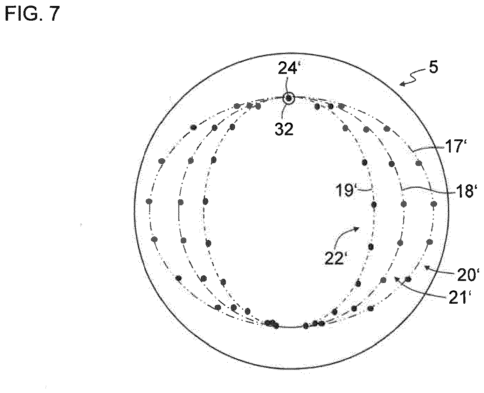

Fig. 7 zeigt ein Beispiel von elliptischen Punktemustern 20', 21', 22' auf dem Spiegel 5, wobei die innere Ellipse 18' einen Kreis bildet, so dass es sich bei dem gemeinsamen Scheitelpunkt 24 um einen Hauptscheitelpunkt der inneren Ellipse 19' und um einen Nebenscheitelpunkt der äußeren Ellipse 17' handelt.

Die Erfindung erlaubt erstmals die gleichzeitige Verwendung mehrerer Lichtquellen mit unterschiedlichen Pfadlängen in einer einzigen, statischen Multipass-Zelle mit einem einzigen Detektor. Die Kombination all dieser Merkmale ist besonders geeignet für präzise laserspektroskopische Messungen mehrerer Gaskomponenten im industriellen Umfeld unter Berücksichtigung der Herstellkosten. Nach dem Stand der Technik konnten bisher immer nur Teilaspekte dieses Ziels erreicht werden, aber nicht die Kombination aus allen, so dass entweder bei der Messung (Genauigkeit, Anzahl der Komponenten) oder bei den Kosten Abstriche gemacht werden mussten. Dies wird im Folgenden näher ausgeführt.

Verglichen mit den bekannten Lösungen kann aufgrund der Erfindung ein spektroskopisches Multikomponenten-Messsystem kostengünstiger hergestellt werden, weil
- keine teuren optischen Komponenten zur Überlagerung der verschiedenen Strahlen zum Einsatz kommen, da jeder Strahl auf einem anderen Pfad umläuft,
- eine einzige Multipasszelle zur Messung mehrerer Komponenten verwendet werden kann, so dass die Kosten für Spiegel, Zellkörper, Verrohrung, ggf. Heizung etc. nur einmal anfallen,
- lediglich ein einziger Detektor zur Detektion aller Strahlen erforderlich ist.

Da die Erfindung unterschiedliche Pfadlängen für unterschiedliche Laser ermöglicht, können außerdem Gaskomponenten mit stark abweichenden Konzentrationen und/oder Absorptionscharakteristiken simultan gemessen werden. Für in kleinen Konzentrationen vorhandene bzw. sehr schwach wechselwirkende Komponenten kann die Pfadlänge somit hinreichend groß gewählt werden, um ein ausreichendes Signal zu erhalten, während bei Komponenten großer Konzentration bzw. stark wechselwirkenden Komponenten durch die Wahl einer kleineren Pfadlänge Sättigung des Messsignals und dadurch eine Verfälschung der Messung vermieden wird. Bei einer einzigen, festen Pfadlänge wäre es dagegen nicht möglich, beide gleichzeitig hinreichend genau zu messen.

Weitere Vorteile der Erfindung gegenüber dem Stand der Technik:
- Die Erfindung kommt, anders als die oben genannten Lösungen zum Erreichen variabler Pfadlängen, ohne bewegliche Teile aus, welche die Gefahr von Verschleiß sowie Fehlfunktionen insbesondere im industriellen Umfeld (z. B. unter Vibrationseinfluss) bergen würden. Somit ermöglicht die Erfindung den Bau zuverlässiger und wartungsarmer Gasanalysatoren.
- Verglichen mit Lösungen, die mehrere Zellen zur Messung mehrerer Gaskomponenten verwenden, kann durch Einsatz nur einer Multipasszelle die Größe des Messgeräts reduziert werden.
- Anders als bei Lösungen mit Strahlkombination über einen Spectral Beam Combiner sind verschiedene Laserwellenlängen in einem breiten Wellenlängenbereich möglich.
- Anders als bei Lösungen mit Strahlkombination über teildurchlässige Spiegel geht kein nennenswerter Anteil der Strahlungsleistung vor der Zelle verloren, wodurch eine bessere Messperformance erreicht wird.

Die Erfindung ermöglicht die Herstellung von kompakten, leistungsfähigen und insbesondere vergleichsweise kostengünstigen Messsystemen für die absorptionsspektroskopische Analyse von Gasen aus mehreren Komponenten.

## Patentansprüche

1. Gasanalysator mit mindestens zwei verschiedenen Strahlungsquellen (10, 11, 12), einem Detektor (14) und einer ein Messgas (2) enthaltenden Herriott-Zelle (1) mit zwei Spiegeln (5, 6), wobei die Strahlungsquellen (10, 11, 12) in Bezug auf die Herriott-Zelle (1) derart angeordnet und ausgerichtet sind, dass von ihnen in die Herriott-Zelle (1) eingekoppelte und zwischen den Spiegeln (5, 6) reflektierte Strahlen (7, 8, 9) in entlang von Ellipsen (17, 18, 19; 17', 18', 19') verlaufenden Punktemustern (20, 21, 22; 20', 21', 22') auf den Spiegeln (5, 6) auftreffen, wobei
- die Ellipsen (17, 18, 19; 17', 18', 19') ineinander liegend auf einer gemeinsamen Symmetrieachse (23) zwei gemeinsame Scheitelpunkte (24, 25) und im Übrigen verschiedene Scheitelpunkte aufweisen,
- die Strahlen (7, 8, 9) von zumindest zwei der verschiedenen Strahlungsquellen (10, 11, 12)
- an unterschiedlichen Stellen (29, 30, 31) der zugehörigen Punktemuster (20, 21, 22; 20', 21', 22') in die Herriott-Zelle (1) eintreten und/oder
- derart in die Herriott-Zelle (1) eintreten, dass sie die zugehörigen Punktemuster (20, 21, 22; 20', 21', 22') entlang den Ellipsen (17, 18, 19; 17', 18', 19') in entgegengesetzten Richtungen durchlaufen,
- alle Strahlen (7, 8, 9) an der Stelle eines der gemeinsamen Scheitelpunkte (24, 25; 24') aus der Herriott-Zelle (1) austreten und auf den Detektor (14) treffen, und wobei
- die Strahlen (7, 8, 9) der zumindest zwei der verschiedenen Strahlungsquellen (10, 11, 12) in der Herriott-Zelle (1) unterschiedliche Pfadlängen durchlaufen.

2. Gasanalysator nach Anspruch 1, **dadurch gekennzeichnet, dass** die gemeinsamen Scheitelpunkte (24, 25) der Ellipsen (17, 18, 19) deren Hauptscheitelpunkte sind.

3. Gasanalysator nach Anspruch 2, **dadurch gekennzeichnet, dass** die äußere Ellipse (17) einen Kreis bildet.

4. Gasanalysator nach einem der vorangehenden Ansprüche, **gekennzeichnet durch** zumindest eine weitere Strahlungsquelle, deren Strahl zusammen mit dem Strahl (z. B. 7) einer der Strahlungsquellen (10, 11, 12) an derselben Stelle (29) derart in die Herriott-Zelle (1) eintritt, dass er das Punktemuster (20) entlang derselben Ellipse (17) in entgegengesetzter Richtung zu der des Strahles (7) durchläuft.

5. Gasanalyseverfahren, bei dem Strahlen (7, 8, 9) von mindestens zwei verschiedenen Strahlungsquellen (10, 11, 12) in eine ein Messgas (2) enthaltende Herriott-Zelle (1) eingekoppelt und nach mehrfacher Reflexion aus dieser ausgekoppelt und detektiert werden, wobei die Strahlen (7, 8, 9) derart ausgerichtet werden, dass sie in entlang von Ellipsen (17, 18, 19; 17', 18', 19') verlaufenden Punktemustern (20, 21, 22; 20', 21', 22') auf den Spiegeln (5, 6) auftreffen, wobei
- die Ellipsen (17, 18, 19; 17', 18', 19') ineinander liegend auf einer gemeinsamen Symmetrieachse (23) zwei gemeinsame Scheitelpunkte (24, 25) und im Übrigen verschiedene Scheitelpunkte aufweisen,
- die Strahlen (7, 8, 9) von zumindest zwei der verschiedenen Strahlungsquellen (10, 11, 12)
- an unterschiedlichen Stellen (29, 30, 31) der zugehörigen Punktemuster (20, 21, 22; 20', 21', 22') in die Herriott-Zelle (1) eingekoppelt werden und/oder
- derart in die Herriott-Zelle (1) eingekoppelt werden, dass sie die zugehörigen Punktemuster (20, 21, 22; 20', 21', 22') entlang den Ellipsen (17, 18, 19; 17', 18', 19') in entgegengesetzten Richtungen durchlaufen,
- alle Strahlen (7, 8, 9) an der Stelle eines der gemeinsamen Scheitelpunkte (24, 25; 24') ausgekoppelt werden, und wobei
- die Strahlen (7, 8, 9) der zumindest zwei der verschiedenen Strahlungsquellen (10, 11, 12) in der Herriott-Zelle (1) unterschiedliche Pfadlängen durchlaufen.

6. Gasanalyseverfahren nach Anspruch 5, **dadurch gekennzeichnet, dass** die Strahlen (7, 8, 9) an der Stelle eines gemeinsamen Hauptscheitelpunkts (24) der Ellipsen (17, 18, 19) ausgekoppelt werden.

7. Gasanalyseverfahren nach Anspruch 6, **dadurch gekennzeichnet, dass** die äußere Ellipse (17) einen Kreis bildet.

8. Gasanalyseverfahren nach einem der Ansprüche 5 bis 7, **dadurch gekennzeichnet, dass** zusammen mit dem Strahl (z. B. 7) zumindest einer der Strahlungsquellen (10, 11, 12) ein weiterer Strahl einer weiteren Strahlungsquelle an derselben Stelle (29) derart in die Herriott-Zelle (1) eingekoppelt wird, dass er das Punktemuster (20) entlang derselben Ellipse (17) in entgegengesetzter Richtung zu der des Strahles (7) durchläuft.

## Claims

1. Gas analyser with at least two different light sources (10, 11, 12), a detector (14) and a Herriott cell (1) containing a measurement gas (2) with two mirrors (5, 6), wherein the radiation sources (10, 11, 12) are arranged and aligned in relation to the Herriott cell (1) in such a manner that beams (7, 8, 9) which are coupled by them into the Herriott cell (1) and reflected between the mirrors (5, 6) strike the mirrors (5, 6) in point patterns (20, 21, 22; 20', 21', 22') which run along ellipses (17, 18, 19; 17', 18', 19'), wherein
- the ellipses (17, 18, 19; 17', 18', 19') have two shared vertices (24, 25) which lie inside one another on a shared axis of symmetry (23) and various vertices apart from these,
- the beams (7, 8, 9) of at least two of the different radiation sources (10, 11, 12)
- enter the Herriott cell (1) at differing points (29, 30, 31) of the associated point pattern (20, 21, 22; 20', 21', 22') and/or
- enter the Herriott cell (1) in such a manner that they pass through the associated point patterns (20, 21, 22; 20', 21', 22') along the ellipses (17, 18, 19; 17', 18', 19') in opposite directions,
- all beams (7, 8, 9) exit the Herriott cell (1) at the point of one of the shared vertices (24, 25; 24') and strike the detector (14), and wherein
- the beams (7, 8, 9) of the at least two of the different radiation sources (10, 11, 12) pass through differing path lengths in the Herriott cell (1).

2. Gas analyser according to claim 1, **characterised in that** the shared vertices (24, 25) of the ellipses (17, 18, 19) are the main vertices thereof.

3. Gas analyser according to claim 2, **characterised in that** the outer ellipse (17) forms a circle.

4. Gas analyser according to one of the preceding claims, **characterised by** at least one further radiation source, the beam thereof entering the Herriott cell (1) together with the beam (e.g. 7) of one of the radiation sources (10, 11, 12) at the same point (29), such that it passes through the point pattern (20) along the same ellipse (17) in the opposite direction to that of the beam (7).

5. Gas analysis method, in which beams (7, 8, 9) of at least two different radiation sources (10, 11, 12) are coupled into a Herriott cell (1) containing a measurement gas (2) and, after being reflected multiple times, are coupled out therefrom and detected, wherein the beams (7, 8, 9) are aligned such that they strike the mirrors (5, 6) in point patterns (20, 21, 22; 20', 21', 22') which run along ellipses (17, 18, 19; 17', 18', 19'), wherein
- the ellipses (17, 18, 19; 17', 18', 19') have two shared vertices (24, 25) which lie inside one another on a shared axis of symmetry (23) and various vertices apart from these,
- the beams (7, 8, 9) of at least two of the different radiation sources (10, 11, 12)
- are coupled into the Herriott cell (1) at differing points (29, 30, 31) of the associated point pattern (20, 21, 22; 20', 21', 22') and/or
- are coupled into the Herriott cell (1) in such a manner that they pass through the associated point patterns (20, 21, 22; 20', 21', 22') along the ellipses (17, 18, 19; 17', 18', 19') in opposite directions,
- all beams (7, 8, 9) are coupled out at the point of one of the shared vertices (24, 25; 24'), and wherein
- the beams (7, 8, 9) of the at least two of the different radiation sources (10, 11, 12) pass through differing path lengths in the Herriott cell (1).

6. Gas analysis method according to claim 5, **characterised in that** the beams (7, 8, 9) are coupled out at the point of a shared primary vertex (24) of the ellipses (17, 18, 19).

7. Gas analysis method according to claim 6, **characterised in that** the outer ellipse (17) forms a circle.

8. Gas analysis method according to one of claims 5 to 7, **characterised in that** a further beam of a further radiation source is coupled into the Herriott cell (1), together with the beam (e.g. 7) of at least one of the radiation sources (10, 11, 12) at the same point (29), such that it passes through the point pattern (20) along the same ellipse (17) in the opposite direction to that of the beam (7).

## Revendications

1. Analyseur de gaz ayant au moins deux sources (10, 11, 12) de rayonnement différentes, un détecteur (14) et une cellule (1) de Herriott contenant un gaz (2) à mesurer et ayant deux miroirs (5, 6), les sources (10, 11 , 12) de rayonnement étant disposées et dirigées par rapport à la cellule (1) de Herriott, de manière à ce que des rayonnements (7, 8, 9) qu'elles font pénétrer dans la cellule (1) de Herriott et qui sont réfléchis entre les miroirs (5, 6) arrivent sur les miroirs (5, 6) en des motifs (20, 21, 22 ; 20', 21', 22') ponctuels s'étendant le long d'ellipses (17, 18, 19 ; 17', 18', 19'), dans lequel
- les ellipses (17, 18, 19 ; 17', 18', 19'), s'imbriquant les unes dans les autres, ont deux sommets (24, 25) communs sur un axe (23) de symétrie commun et en outre des sommets différents,
- les rayonnements (7, 8, 9) d'au moins deux sources (10, 11, 12) différentes de rayonnement
- entrent dans la cellule (1) de Herriott en des endroits (29, 30, 31) différents des motifs (20, 21, 22 ; 20', 21', 22') ponctuels associés et/ou
- entrent dans la cellule (1) de Herriott de manière à parcourir en sens contraire les motifs (20, 21, 22 ; 20', 21', 22') ponctuels associés suivant les ellipses (17, 18, 19 ; 17', 18', 19'),
- tous les rayonnements (7, 8, 9) sortent de la cellule (1) de Herriott à l'emplacement de l'un des sommets (24, 25 ; 24') communs et arrivent sur le détecteur (14), et dans lequel
- les rayonnements (7, 8, 9) des au moins deux sources (10, 11, 12) différentes de rayonnement parcourent des longueurs de trajets différentes dans la cellule (1) de Herriott.

2. Analyseur de gaz suivant la revendication 1, **caractérisé en ce que** les sommets (24, 25) communs des ellipses (17, 18, 19) sont leurs sommets principaux.

3. Analyseur de gaz suivant la revendication 2, **caractérisé en ce que** l'ellipse (17) extérieure forme un cercle.

4. Analyseur de gaz suivant l'une des revendications précédentes, **caractérisé par** au moins une autre source de rayonnement, dont le rayon pénètre ensemble avec le rayon (par exemple 7) de l'une des sources (10, 11, 12) de rayonnement au même endroit (29) dans la cellule (1) de Herriott de manière à parcourir le motif (20) ponctuel le long de la même ellipse (17) en sens contraire à celui du rayon (7) .

5. Procédé d'analyse de gaz, dans lequel on envoie des rayonnements (7, 8, 9) d'au moins deux sources (10, 11, 12) différentes de rayonnement dans une cellule (1) de Herriott contenant un gaz (2) à mesurer et, après les avoir réfléchis plusieurs fois, on les en fait sortir et on les détecte, dans lequel on dirige les rayonnements (7, 8, 9) de manière à ce qu'ils arrivent sur les miroirs (5, 6) en des motifs (20, 21, 22 ; 20', 21', 22') ponctuels s'étendant suivant des ellipses (17, 18, 19 ; 17', 18', 19') dans lequel
- les ellipses (17, 18, 19 ; 17', 18', 19'), s'imbriquant les unes dans les autres, ont deux sommets (24, 25) communs sur un axe (23) de symétrie commun et en outre des sommets différents,
- on fait entrer dans la cellule (1) de Herriott les rayonnements (7, 8, 9) d'au moins deux sources (10, 11, 12) différentes de rayonnement
- en des endroits (29, 30, 31) différents des motifs (20, 21, 22 ; 20', 21', 22') ponctuels associés et/ou
- on les fait entrer dans la cellule (1) de Herriott, de manière à ce qu'ils parcourent dans des sens opposés les motifs (20, 21, 22 ; 20', 21', 22') ponctuels associés le long des ellipses (17, 18, 19 ; 17', 18', 19'),
- on fait sortir tous les rayonnements (7, 8, 9) à l'endroit de l'un des sommets (24, 25 ; 24') communs et, dans lequel
- les rayonnements (7, 8, 9) d'au moins deux sources (10, 11, 12) différentes de rayonnement parcourent des longueurs de trajets différentes dans la cellule (1) de Herriott.

6. Procédé d'analyse de gaz suivant la revendication 5, **caractérisé en ce que** l'on fait sortir les rayonnements (7, 8, 9) à l'endroit d'un sommet (24) principal commun des ellipses (17, 18, 19) .

7. Procédé d'analyse de gaz suivant la revendication 6, **caractérisé en ce que** l'ellipse (17) extérieure forme un cercle.

8. Procédé d'analyse de gaz suivant l'une des revendications 5 à 7, **caractérisé en ce que** l'on fait entrer dans la cellule (1) de Herriott au même endroit (29) ensemble avec le rayonnement (par exemple 7) d'au moins l'une des sources (10, 11, 12) de rayonnement, un autre rayonnement d'une autre source de rayonnement, de manière à ce qu'il parcourt le motif (20) ponctuel le long de la même ellipse (17) dans le sens contraire à celui du rayonnement (7).
